# EUROPEAN PATENT APPLICATION

(11) **EP 4 072 033 A1**
(43) Date of publication of application: **12.10.2022**
(21) Application number: 20896126.8
(22) Date of filing: 04.12.2020
(51) Int. Cl.: H04B 7/0413

(54) **DATA RECEPTION METHOD, TERMINAL DEVICE, AND SYSTEM**

(30) Priority: 04.12.2019 CN 201911230121
(71) Applicant: Oneplus Technology (Shenzhen) Co., Ltd., Shenzhen, Guangdong 518000 (CN)
(72) Inventor: SINHA, Ritesh Kumar, Shenzhen, Guangdong 518042 (CN); SINGH, Satish Kumar, Shenzhen, Guangdong 518042 (CN)
(74) Representative: Penza, Giancarlo
(86) International application number: PCT/CN2020/133776
(87) International publication number: WO 2021/110113

(57) **Abstract**

The present application relates to a data reception method, a terminal device, and a system. The terminal device can be connected to an external antenna, and when the terminal device is connected to the external antenna, first antennas of the terminal device and second antennas of the external antenna form a MIMO antenna array. The method comprises: the terminal device acquiring pieces of first data respectively received by at least one of the first antennas and a composite signal sent by the external antenna; demultiplexing the composite signal by means of a demultiplexer, so as to obtain pieces of second data respectively corresponding to at least one of the second antennas; and processing at least one piece of the first data and at least one piece of the second data by means of a processor, so as to obtain target data.

## Description

### CROSS REFERENCE OF RELATED APPLICATION

The present disclosure claims a priority from Chinese patent application No. 201911230121.4 entitled "DATA RECEIVING METHOD, TERMINAL DEVICE AND SYSTEM" filed to the China National Intellectual Property Administration on December 04, 2019, the entire content of which is incorporated herein by reference.

### TECHNICAL FIELD

The present disclosure relates to the field of communication technologies, and more particularly to a data receiving method, a terminal device, and a data receiving system.

### BACKGROUND

MIMO (multiple input multiple output) is an antenna system that uses multiple antennas at both transmitter and receiver to greatly improve channel capacity, and forms multiple channels between the transmitter and the receiver. MIMO system has a high spectrum utilization efficiency.

With the development of communication technology, large-scale MIMO technology has been more and more widely used in improving communication rate and communication quality. However, implementation of large-scale MIMO requires a large number of antennas at the receiver and the transmitter to form an antenna array to increase the number of channels and further improve the transmission rate. For the network side, it is only needed to directly add physical antennas to realize the large-scale MIMO. Like the common network side, thousands of physical antennas can be set to realize the large-scale MIMO. However, for ordinary terminal devices, such as mobile phones, the volume requirement is relatively high. To realize the large-scale MIMO, physical antennas are required to be set on the terminal device, which will lead to a significant increase in the volume of the terminal device.

### SUMMARY

In a first aspect, an embodiment of the present disclosure provides a data receiving method, which is applied for a terminal device capable of being connected to an external antenna. The terminal device may include at least one first antenna, the external antenna may include at least one second antenna, and the at least one first antenna and the at least one second antenna cooperatively form a multiple input multiple output (MIMO) antenna array when the terminal device is connected to the external antenna. The method may include: acquiring first data received by at least one the first antenna; acquiring a composite signal transmitted from the external antenna, where the composite signal is data obtained after multiplexing, by a multiplexer, second data received by at least one the second antenna; demultiplexing, by a demultiplexer, the composite signal to thereby obtain the second data corresponding to at least one the second antenna; and processing, by a processor, at least one the first data and at least one the second data to thereby obtain target data.

In at least one embodiment, the terminal device may further include a first short-range communication module connected to an input terminal of the demultiplexer, the external antenna may further include a second short-range communication module connected to an output terminal of the multiplexer, and the terminal device is communicatively connected to the external antenna through the first short-range communication module and the second short-range communication module. The acquiring a composite signal transmitted from the external antenna may include: receiving, by the first short-range communication module, the composite signal transmitted from the second short-range communication module; and acquiring, by the demultiplexer, the composite signal from the first short-range communication module.

In at least one embodiment, the demultiplexing, by a demultiplexer, the composite signal to obtain the second data corresponding to at least one the second antenna may include: filtering the composite signal to filter out an interference signal in the composite signal, to thereby obtain an intermediate signal; and demultiplexing, by the demultiplexer, the intermediate signal to obtain the second data corresponding to at least one the second antenna.

In at least one embodiment, before the demultiplexing, by a demultiplexer, the composite signal, the method may further include: detecting whether a signal intensity of the composite signal is greater than a preset intensity threshold; and adjusting, in response to the signal intensity of the composite signal being less than the preset intensity threshold, the signal intensity of the composite signal to be greater than the preset intensity threshold.

In at least one embodiment, when the terminal device is capable of being connected to a requesting terminal, and in response to the terminal device is connected to the requesting terminal, the method may further include: receiving a data access request transmitted from the requesting terminal; responding to the access request of the requesting terminal; and transmitting, based on the data access request, the target data to the requesting terminal.

In a second aspect, an embodiment of the present disclosure is to provide a data receiving method applied for a data receiving system. The data receiving system may include a terminal device and an external antenna communicatively connected to the terminal device. The terminal device may include at least one first antenna, the external antenna may include at least one second antenna, and the at least one first antenna and the at least one second antenna cooperatively form a MIMO antenna array, The method may include: receiving, by the terminal device, first data through at least one the first antenna; receiving, by the external antenna, second data through at least one the antenna, and multiplexing, by the external antenna, at least one the second data through a multiplex to obtain a composite signal; transmitting, by the external antenna, the composite signal to the terminal device; acquiring, by the terminal device, the composite signal; demultiplexing, by the terminal device, the composite signal through a demultiplexer to obtain the second data corresponding to at least one the second antenna through; and processing, by the terminal device, the first data and the second data through a processor to obtain target data.

In at least one embodiment, the terminal device may further include a first short-range communication module connected to an input terminal of the demultiplexer, the external antenna may further include a second short-range communication module connected to an output terminal of the multiplexer, and the terminal device is communicatively connected to the external antenna through the first short-range communication module and the second short-range communication module. The acquiring, by the external antenna, a composite signal may include: receiving, by the terminal device, the composite signal transmitted from the second short-range communication module through the first short-range communication module; and acquiring, by the terminal device, the composite signal from the first short-range communication module through the demultiplexer.

In at least one embodiment, the demultiplexing, by the terminal device, the composite signal through a demultiplexer to obtain the second data corresponding to at least one the second antenna may include: filtering, by the terminal device, the composite signal to filter out an interference signal in the composite signal, to thereby obtain an intermediate signal; and demultiplexing, by the terminal device, the intermediate signal through the demultiplexer to thereby obtain the second data corresponding to at least one the second antenna.

In a third aspect, an embodiment of the present disclosure is to provide a terminal device. The terminal device may include a demultiplexer, at least one first antenna, and a processor, and the processor is connected to an output terminal of the demultiplexer and the at least one first antenna individually. Each of the at least one first antenna is configured to receive first data. The demultiplexer is configured to acquire a composite signal obtained by multiplexing multiple second data by a multiplexer, and demultiplex the composite signal to obtain at least one the second data, the multiple second data are data received by second antennas forming a MIMO antenna array with the at least one first antenna. The processor configured to process the first data and the second data to obtain target data.

In a fourth aspect, an embodiment of the present disclosure is to provide a data receiving system. The data receiving system may include a terminal device and an external antenna communicatively connected to the terminal device. The terminal device may include at least one first antenna, a demultiplexer and a processor, and input terminals of the processor are respectively connected to output terminals of the demultiplexer and the first antenna. The external antenna may include at least one second antenna and a multiplexer, each of the at least one second antenna is respectively connected to an input terminal of the multiplexer, and the at least one first antenna and the at least one second antenna cooperatively form a MIMO antenna array. The at least one first antenna is configured to receive first data. The at least one second antenna is configured to receive second data. The multiplexer is configured to multiplex at least one the second data to obtain a composite signal. The demultiplexer is configured to receive the composite signal and demultiplex the composite signal to obtain at least one the second data. The processor is configured to process the first data and the second data to obtain target data.

### BRIEF DESCRIPTION OF DRAWINGS

In order to more clearly illustrate technical solutions of embodiments of the present disclosure, the drawings required in the embodiments will be briefly introduced below. It should be understood that the following drawings only illustrate some embodiments of the present disclosure, and therefore should not be regarded as limiting the scope. For those skilled in the related art, other related drawings can be derived from these drawings without paying creative labor.
FIG. 1 illustrates a schematic diagram of a relationship between a data receiving system and a base station provided by an embodiment of the present disclosure.
FIG. 2 illustrates a schematic structural diagram of a data receiving system provided by an embodiment of the present disclosure.
FIG. 3 illustrates a first schematic flowchart of a data receiving method provided by an embodiment of the present disclosure.
FIG. 4 illustrates a schematic structural diagram of a multiplexer provided by an embodiment of the present disclosure.
FIG. 5 illustrates a schematic diagram of a relationship between selection signals and multiplexing signals provided by an embodiment of the present disclosure.
FIG. 6 illustrates a schematic structural diagram of a demultiplexer provided by an embodiment of the present disclosure.
FIG. 7 illustrates a schematic diagram of a relationship between the selection signals and output signals provided by an embodiment of the present disclosure.
FIG. 8 illustrates a second schematic flowchart of the data receiving method provided by the embodiment of the present disclosure.

Description of reference numerals: 100-terminal device; 110-demultiplexer; 120-first antenna module; 130-processor; 140-first short-range communication module; 200-external antenna; 210-second antenna module; 230-multiplexer; 240-second short-range communication module; and 300-base station.

### DETAILED DESCRIPTION OF EMBODIMENTS

In order to make purposes, technical solutions and advantages of embodiments of the present disclosure clearer, the technical solutions in the embodiments of the present disclosure will be clearly and completely described below in conjunction with the accompanying drawings in the embodiments of the present disclosure. Obviously, the illustrated embodiments are some of the embodiments of the present disclosure, not all of the embodiments. The components of the embodiments of the present disclosure generally described and illustrated in the drawings herein may be arranged and designed in a variety of different configurations.

Accordingly, the following detailed description of the embodiments of the present disclosure provided in the accompanying drawings is not intended to limit the scope of the claimed application, but in merely representative of selected embodiments of the present disclosure. Based on the embodiments in the present disclosure, all other embodiments those skilled in the related art without creative labor belong to the scope of protection of the present disclosure.

It should be noted that similar reference numerals and letters refer to similar items in the following drawings. Therefore, once an item is defined in one figure, it does not need to be further defined and explained in subsequent figures.

In the description of the present disclosure, it should also be noted that, unless otherwise specified and limited, the terms "setting", "installation", "connected" and "connection" should be understood in a broad sense. For example, they can be fixed connection, removable connection or integrated connection; they further can be mechanical connection or electrical connection; they still further can be connected directly or indirectly through an intermediate medium, and internal connection between two components. For those skilled in the related art, the specific meaning of the above terms in the present disclosure can be understood in specific context.

Multiple input multiple output (MIMO) is an antenna system that uses multiple antennas at both transmitter and receiver to greatly improve channel capacity, and forms multiple channels between the transmitter and the receiver. MIMO system has a very high spectrum utilization efficiency. However, with improvements of various technologies, people have higher requirements for communication rate, and therefore large-scale MIMO appears. The large-scale MIMO is a technology that realizes more transmission channels and higher transmission rate through more antennas than ordinary MIMO.

In one embodiment, the large-scale MIMO is realized by adding physical antennas. However, in a terminal device 100 such as a mobile phone, the large-scale MIMO means that a volume of the mobile phone is too large, which will undoubtedly have an adverse impact on a use of the mobile phone.

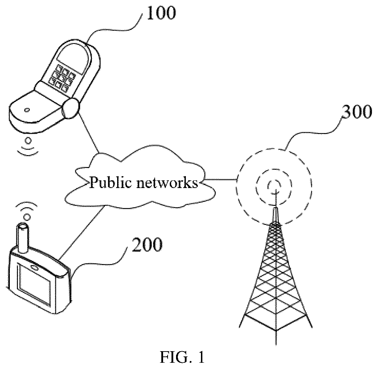

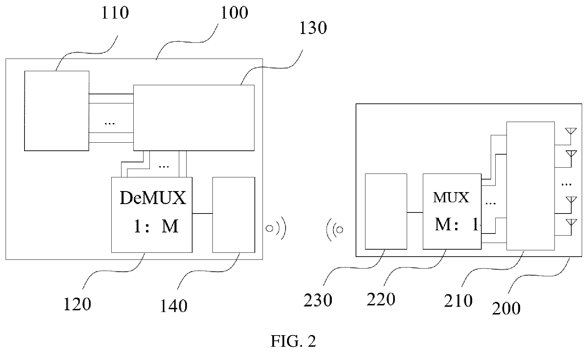

In order to solve the problem of realizing the large-scale MIMO in the terminal device 100 such as the mobile phone, this embodiment provides a data receiving method. Referring to FIG. 1 and FIG. 2. FIG. 1 is a schematic diagram of a relationship between a data receiving system and a base station provided by an embodiment of the present disclosure, and FIG. 2 is a schematic structural diagram of the data receiving system provided by the embodiment of the present disclosure. The data receiving system may include a terminal device 100 and an external antenna 200 communicatively connected to the terminal device 100. Both the terminal device 100 and the external antenna 200 are communicatively connected to the same base station 300. The terminal device 100 may include a first antenna module 120, a demultiplexer 110 and a processor 130. The first antenna module 120 may include at least one first antenna, and an input terminal of the processor 130 is connected to an output terminal of the demultiplexer 110 and the at least one first antenna individually. In this embodiment, the terminal device 100 may further include a memory, and the memory is directly or indirectly electrically connected to the processor 130 to realize data interaction. For example, these elements can be electrically connected to each other through one or more communication buses or signal lines. The external antenna 200 may include a second antenna module 210 and a multiplexer 230, the second antenna module 210 is disposed with at least one second antenna, the at least one second antenna is connected to an input of the multiplexer 230, and the at least one first antenna and the at least one second antenna cooperatively form a MIMO antenna array.

The multiplexer 230 is an electronic device capable of receiving multiple input signals and synthesizing a single output signal in a manner in which at least one of the multiple input signals is recoverable. The demultiplexer 110 is an electronic device that uses an input data line and then switches it to one of any output lines to convert serial data at the input terminal into parallel data at the output terminal.

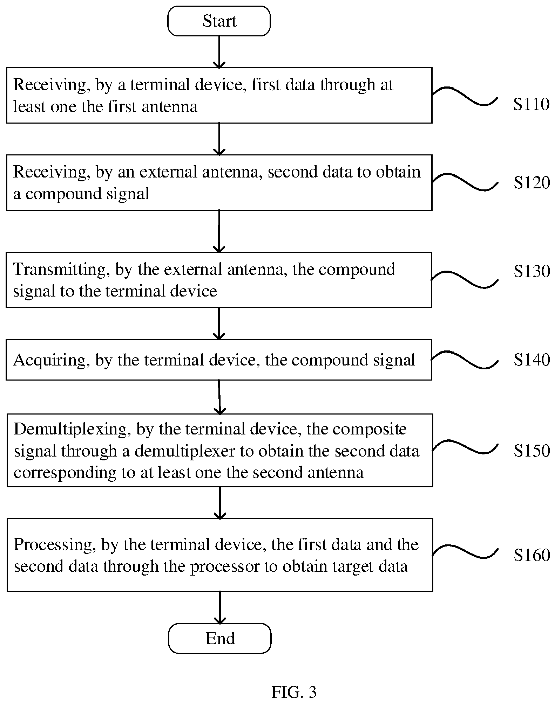

Referring to FIG. 3, this embodiment also provides a data receiving method applied for the above terminal device. The method may include blocks S110 through S160 as follows.

At the block S110, receiving, by the terminal device 100, first data through at least one the first antenna.

At the block S120, receiving, by the external antenna 200, second data to obtain a composite signal.

Specifically, the external antenna 200 receives the second data through the at least one the second antenna, and multiplexes the second data with the multiplexer 230 to thereby obtain the composite signal.

At the block S130, transmitting, by the external antenna 200, the composite signal to the terminal device 100.

At the block S140, acquiring, by the terminal device 100, the composite signal.

At the block S150, demultiplexing, by the terminal device 100, the composite signal through a demultiplexer to obtain the second data corresponding to at least one the second antenna.

Specifically, the terminal device 100 demultiplexes the composite signal through the demultiplexer 110 to thereby obtain the second data corresponding to the at least one second antenna.

At the block S160, processing, by the terminal device 100, the first data and the second data through the processor 130 to obtain target data.

In this embodiment, the second data received by at least one the second antenna in the external antenna 200 is multiplexed into a composite signal through the multiplexer 230 of the external antenna 200, then the composite signal multiplexed by the multiplexer 230 is transmitted to the terminal device 100 by the external antenna 200, and the terminal device 100 demultiplexes the composite signal, so as to obtain the second data corresponding to at least one the second antenna by the terminal device 100. Since the terminal device 100 is disposed with the at least one first antenna, the terminal device 100 is equivalent to having each first antenna capable of receiving the first data and each second antenna capable of receiving the second data at the same time. In other words, although the terminal device 100 itself has only the first antenna, it is actually equivalent to having the same number of antennas as the second antenna. In this way, the transmission channels can be doubled without adding physical antennas to the terminal device 100. When processing the first data and the second data, the processor recovers the target data from the first data and the second data according to a mode corresponding to a mode adopted by the base station for transmitting the data.

The first data and the second data may be data transmitted by the base station 300 to the target data in a MIMO communication mode. The MIMO technology used in data transmission between the base station 300, the terminal device 100 and the external antenna 200 can be realized by using the existing MIMO technology. For example, in this embodiment, the diversity of the MIMO technology can be adopted, but is not limited to spatial transmission diversity, space-frequency transmission diversity, cyclic delay transmission diversity and two antenna transmission diversity. The multiplexing technology of MIMO technology can be realized by spatial multiplexing, closed-loop multiplexing and open-loop multiplexing.

In order to deepen the understanding of this solution, the solution of this embodiment is explained below in conjunction with the multiplexer 230 with 4 inputs and 1 output and the demultiplexer 110 with 1 input and 4 outputs.

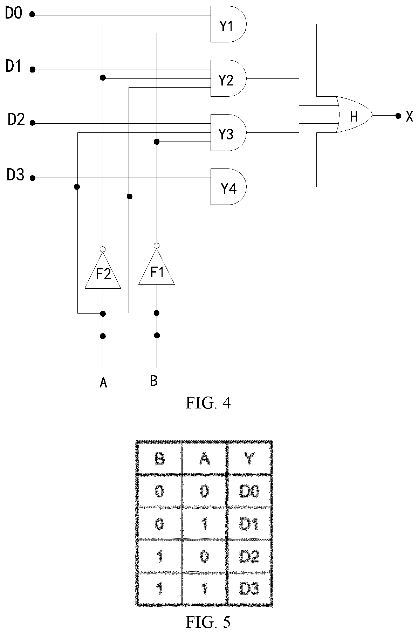

Referring to FIG. 4, the multiplexer 230 may include two NOT gate logic devices (F1 and F2), four AND gate logic devices (Y1, Y2, Y3 and Y4) and one OR gate logic device (H). Among them, one input terminal of at least one of Y1, Y2, Y3 and Y4 is configured to connect the output terminal of one second antenna, that is, one input terminal of the at least one of Y1, Y2, Y3 and Y4 corresponds to the input terminal of the second data D0 D1, D2 and D3. The other two input terminals of Y1 are respectively connected to output terminals of F1 and F2. The other two input terminals of Y2 are respectively connected to input terminal of F1 and the output terminal of F2. The other two input terminals of Y3 are respectively connected to the output terminal of F1 and the input terminal of F2. The other two input terminals of Y4 are respectively connected to the input terminals of F1 and F2. The output terminals of Y1, Y2, Y3 and Y4 are respectively connected to the input terminals of H, and the output terminal of H is the output terminal of the multiplexer 230. Among them, the input terminals of F1 and F2 are respectively configured to input a selection signal A and a selection signal B. When the selection signal A and the selection signal B cooperatively form different selection signals, the purpose of integrating different second data into the composite signal can be realized.

Referring to FIG. 4 and FIG. 5, for example, when input states of the selection signals A and B are 0 and 0 respectively, the second data D0 is multiplexed in the output result of the multiplex 230. When the input states of the selection signals A and B are 1 and 0 respectively, the second data D1 is multiplexed in the output result of the multiplexer 230. When the input states of the selection signals A and B are 0 and 1 respectively, the second data D2 is multiplexed in the output result of the multiplexer 230. When the input states of the selection signals A and B are 1 and 1 respectively, the second data D3 is multiplexed in the output result of multiplexer 230. Thus, the composite signal X can be obtained. Specifically, the input state "0" indicates that the selection signal is low level, and the input state "1" indicates that the selection signal is high level.

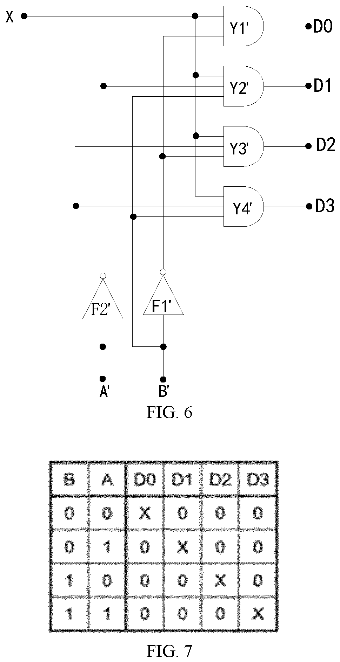

Referring to FIG. 6, the demultiplexer 110 may include four AND gate logic devices (Y1', Y2', Y3 'and Y4') and two NOT gate logic devices (F1', F2'). in which one input terminal of at least one of four AND logic devices is configured to connect a structure for inputting the composite signal X, that is, the composite signal X is input to these input terminals. The other two input terminals of Y1' are respectively connected to the output terminals of F1' and F2'. The other two input terminals of Y2' are respectively connected to the input terminal of F1' and the output terminal of F2'. The other two input terminals of Y4' are respectively connected to the input terminals of F1' and F2'. Among them, the input terminals of F1' and F2' are respectively configured to input a selection signal A' and a selection signal B' respectively. When the selection signal A' and the selection signal B' cooperatively form different selection signals, different second data outputs can be realized.

Referring to FIG. 7, for example, when input states of A' and B' are 0 and 0 respectively, the output of demultiplexer 110 is the second data D0. When the input states of A' and B' are 1 and 0 respectively, the output of demultiplexer 110 is the second data D1. When the input states of A' and B' are 0 and 1 respectively, the output of demultiplexer 110 is the second data D2. When the input states of A' and B' are 1 and 1 respectively, the output of demultiplexer 110 is the second data D3. Specifically, the input state "0" indicates that the selection signal is low level, and the input state "1" indicates that the selection signal is high level.

Among them, the states of selection signal A, selection signal B, selection signal A' and selection signal B' can be controlled by modifying software.

In at least one embodiment, the terminal device 100 may further includes a first short-range communication module 140 connected to the input terminal of the demultiplexer 110. The external antenna 200 may further include a second short-range communication module 240, connected to the output terminal of the multiplexer 230. The terminal device 100 is communicatively connected to the external antenna 200 through the first short-range communication module 140 and the second short-range communication module 240.

Specifically, the external antenna 200 and the terminal device 100 may be communicated through wireless communication. For example, the external antenna 200 and the terminal device 100 may be communicated through WiFi. In this situation, the first short-range communication module 140 may be a built-in WiFi module of the terminal device 100, and the second short-range communication module 240 may also be implemented by a built-in WiFi module. The external antenna 200 and the terminal device 100 may also be communicated through Bluetooth. In this situation, the first short-range communication module 140 may be a built-in Bluetooth module of the terminal device 100, and the second short-range communication module 240 may also adopts a built-in Bluetooth module. The external antenna 200 and the terminal device 100 may also be communicated through physical transmission, for example, through the existing USB (universal serial bus) interface of the mobile phone. In this way, the USB interface may be connected to the input terminal of the composite signal of the demultiplexer 110 at the same time.

In this embodiment, before data transmission between the terminal device and the external antenna, the two may be paired first, so that at least one terminal device receives only the composite signal generated by its paired external antenna when receiving the composite signal.

At the block S130, when the external antenna 200 transmits the composite signal to the terminal device 100, it may be transmitted through the second short-range communication module 240.

At the block S140, when the terminal device 100 obtains the composite signal, it may be transmitted through the first short-range communication module 140, that is, the terminal device 100 can receive, by the first short-range communication module 140, the composite signal transmitted through the second short-range communication module 240, and then obtain the composite signal from the first short-range communication module 140 through the demultiplexer 110.

In this embodiment, the data interaction between the terminal device 100 and the external antenna 200 is implemented through the first short-range communication module 140 and the second short-range communication module 240.

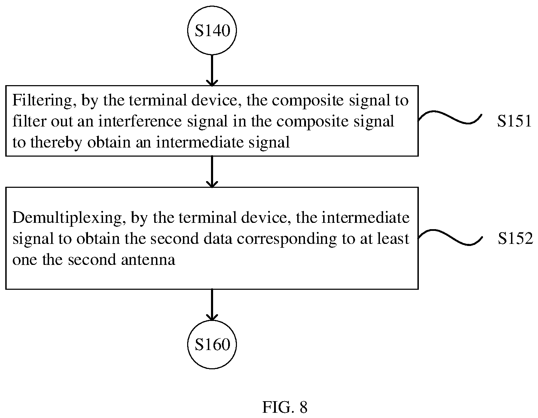

In the process of transmission, the signal may be affected by interference signals in the environment, resulting in signal distortion. Therefore, in this embodiment, the block S150 may further include sub block S151 and sub block S152 as shown in FIG. 8.

At the block S151, filtering, by the terminal device 100, the composite signal to filter out an interference signal in the composite signal to thereby obtain an intermediate signal.

At the block S 152, demultiplexing, by the terminal device 100, the intermediate signal to obtain the second data corresponding to at least one the second antenna.

Specifically, the terminal device 100 demultiplexes the intermediate signal through the demultiplexer 110 to thereby obtain the second data corresponding to at least one the second antenna.

In this embodiment, the composite signal received by the terminal device 100 is filtered to eliminate the interference signal in the composite signal, that is, to eliminate the noise in the received composite signal.

In at least one embodiment, before the block S150, the method further includes: detecting, by the terminal device 100, whether a signal intensity of the composite signal is greater than a preset intensity threshold, and adjusting, in response to the signal intensity of the composite signal being less than the preset intensity threshold, the signal intensity of the composite signal to be greater than the preset intensity threshold.

In this embodiment, the received composite signal is adjusted by the terminal device 100 so that the intensity of the composite signal used for demultiplexing can be maintained at the preset intensity threshold, thereby ensuring the accuracy of the composite signal.

In at least one embodiment, the data receiving system may further include a requesting terminal communicatively connected to the terminal device 100, that is, the terminal device 100 capable of being connected to the requesting terminal. The method may further include: the terminal device receiving, by the terminal device 100, a data access request transmitted from the requesting terminal, responding to the access request of the requesting terminal; and transmitting, based on the acquisition request, the target data to the requesting terminal.

In this embodiment, the terminal device 100 is used as a data receiving point in one data receiving system, so that the received data is forwarded to the requesting terminal according to the request of the requesting terminal, thereby achieving the effect of providing high-speed communication for other devices.

In summary, in this embodiment, by setting the demultiplexer 110 in the terminal device 100 and the multiplexer 230 in the external antenna 200, the multi-channel second data received by the external antenna 200 is transmitted to the terminal device 100 in the form of one channel composite signal, and the terminal device 100 demultiplexes the composite signal through the demultiplexer 110 to recover at least one channel of second data. The second data is transmitted to the processor 130 in the same way as the first data on the first antenna, and the processor 130 processes the first data and the second data to obtain the target data. The number of channels of signals actually received by the terminal device 100 without adding physical antennas increases significantly in the number of first antennas, thereby increasing the number of transmission channels between the terminal device 100 and the base station 300 and improving the speed and efficiency of the data transmission.

The above description is only for various embodiments of the present disclosure, but the scope of protection of the present disclosure is not limited thereto. Any person familiar with the technical field can easily think of changes or substitutions within the technical scope disclosed in the present disclosure, which shall be covered within the scope of protection of the present disclosure. Therefore, the scope of protection of the present disclosure shall be subject to the scope of protection of the claims.

## Claims

1. A data receiving method, applied for a terminal device capable of being connected to an external antenna, the terminal device comprising at least one first antenna, the external antenna comprising at least one second antenna, and the at least one first antenna and the at least one second antenna cooperatively forming a multiple input multiple output (MIMO) antenna array when the terminal device is connected to the external antenna; and the method comprising:
acquiring first data received by at least one the first antenna;
acquiring a composite signal transmitted from the external antenna, wherein the composite signal is data obtained after multiplexing, by a multiplexer, second data received by at least one the second antenna;
demultiplexing, by a demultiplexer, the composite signal to obtain the second data corresponding to at least one the second antenna; and
processing, by a processor, at least one the first data and at least one the second data to obtain target data.

2. The method according to claim 1, wherein the terminal device further comprises a first short-range communication module connected to an input terminal of the demultiplexer, the external antenna further comprises a second short-range communication module connected to an output terminal of the multiplexer, the terminal device is communicatively connected to the external antenna through the first short-range communication module and the second short-range communication module; and the acquiring a composite signal transmitted from the external antenna comprises:
receiving, by the first short-range communication module, the composite signal transmitted from the second short-range communication module; and
acquiring, by the demultiplexer, the composite signal from the first short-range communication module.

3. The method according to claim 1, wherein the demultiplexing, by a demultiplexer, the composite signal to obtain the second data corresponding to at least one the second antenna comprises:
filtering the composite signal to filter out an interference signal in the composite signal, to thereby obtain an intermediate signal; and
demultiplexing, by the demultiplexer, the intermediate signal to obtain the second data corresponding to at least one the second antenna.

4. The method according to any one of claims 1-3, wherein before the demultiplexing, by a demultiplexer, the composite signal, the method further comprises:
detecting whether a signal intensity of the composite signal is greater than a preset intensity threshold; and
adjusting, in response to the signal intensity of the composite signal being less than the preset intensity threshold, the signal intensity of the composite signal to be greater than the preset intensity threshold.

5. The method according to any one of claims 1-3, wherein the terminal device is capable of being connected to a requesting terminal, and in response to the terminal device is connected to the requesting terminal, the method further comprises:
receiving a data access request transmitted from the requesting terminal;
responding to the access request of the requesting terminal; and
transmitting, based on the data access request, the target data to the requesting terminal.

6. A data receiving method, applied for a data receiving system, the data receiving system comprising a terminal device and an external antenna communicatively connected to the terminal device, the terminal device comprising at least one first antenna, the external antenna comprising at least one second antenna, and the at least one first antenna and the at least one second antenna cooperatively forming a MIMO antenna array; and the method comprising:
receiving, by the terminal device, first data through at least one the first antenna;
receiving, by the external antenna, second data through at least one the second antenna, and multiplexing, by the external antenna, at least one the second data through a multiplexer to obtain a composite signal;
transmitting, by the external antenna, the composite signal to the terminal device;
acquiring, by the terminal device, the composite signal;
demultiplexing, by the terminal device, the composite signal through a demultiplexer to obtain the second data corresponding to at least one the second antenna; and
processing, by the terminal device, the first data and the second data through a processor to obtain target data.

7. The method according to claim 6, wherein the terminal device further comprises a first short-range communication module connected to an input terminal of the demultiplexer, the external antenna further comprises a second short-range communication module connected to an output terminal of the multiplexer, the terminal device is communicatively connected to the external antenna through the first short-range communication module and the second short-range communication module; and the acquiring, by the external antenna, the composite signal comprises:
receiving, by the terminal device, the composite signal transmitted from the second short-range communication module through the first short-range communication module; and
acquiring, by the terminal device, the composite signal from the first short-range communication module through the demultiplexer.

8. The method according to claim 6 or 7, wherein the demultiplexing, by the terminal device, the composite signal through a demultiplexer to obtain the second data corresponding to at least one the second antenna comprises:
filtering, by the terminal device, the composite signal to filter out an interference signal in the composite signal, to thereby obtain an intermediate signal; and
demultiplexing, by the terminal device, the intermediate signal through the demultiplexer to obtain the second data corresponding to at least one the second antenna.

9. A terminal device, comprising:
a demultiplexer, at least one first antenna, and a processor;
wherein the processor is connected to output terminals of the demultiplexer and the at least one first antenna individually;
wherein each of the at least one first antenna is configured to receive first data;
wherein the demultiplexer is configured to acquire a composite signal obtained by multiplexing a plurality of second data by a multiplexer, and demultiplex the composite signal to obtain at least one the second data, the plurality of second data are data received by second antennas forming a MIMO antenna array with the at least one first antenna; and
wherein the processor is configured to process the first data and the second data to obtain target data.

10. The terminal device according to claim 9, wherein the terminal device further comprises: a first short-range communication module, connected to an input terminal of the demultiplexer;
wherein an external antenna comprises a second short-range communication module connected to an output terminal of the multiplexer, and the terminal device is communicatively connected to the external antenna through the first short-range communication module and the second short-range communication module;
wherein the first short-range communication module is configured to receive the composite signal transmitted from the second short-range communication module; and
wherein the demultiplexer is specifically configured to acquire the composite signal from the first short-range communication module.

11. The terminal device according to claim 9, wherein the demultiplexer is configured to filter the composite signal to filter out an interference signal in the composite signal to thereby obtain an intermediate signal, and demultiplex the intermediate signal to obtain the second data corresponding to at least one the second antenna.

12. The terminal device according to any one of claims 9-11, wherein the demultiplexer is further configured to detect whether a signal intensity of the composite signal is greater than a preset intensity threshold, and adjust, in response to the signal intensity of the composite signal being less than the preset intensity threshold, the signal intensity of the composite signal to be greater than the preset intensity threshold.

13. The terminal device according to any one of claims 9-11, wherein the terminal device is capable of being connected to a requesting terminal, and when the terminal device is connected to the requesting terminal, the first antenna is further configured to receive a data access request transmitted from the requesting terminal; and
wherein the processor is further configured to respond to the access request of the requesting terminal, and transmit, based on the data access request, the target data to the requesting terminal.

14. A data receiving system, comprising:
a terminal device and an external antenna communicatively connected to the terminal device;
wherein the terminal device comprises at least one first antenna, a demultiplexer and a processor, and input terminals of the processor are respectively connected to output terminals of the demultiplexer and the at least one first antenna;
wherein the external antenna comprises at least one second antenna and a multiplexer, each of the at least one second antenna is connected to an input terminal of the multiplexer, and the at least one first antenna and the at least one second antenna cooperatively form a MIMO antenna array;
wherein the first antenna is configured to receive first data;
wherein the second antenna is configured to receive second data;
wherein the multiplexer is configured to multiplex at least one the second data to obtain a composite signal;
wherein the demultiplexer is configured to receive the composite signal and demultiplex the composite signal to obtain at least one the second data; and
wherein the processor is configured to process the first data and the second data to obtain target data.

15. The data receiving system according to claim 14, wherein the terminal device further comprises a first short-range communication module connected to an input terminal of the demultiplexer, the external antenna further comprises a second short-range communication module connected to an output terminal of the multiplexer, the terminal device is communicatively connected to the external antenna through the first short-range communication module and the second short-range communication module;
wherein the first short-range communication module is configured to receive the composite signal transmitted from the second short-range communication module; and
wherein the demultiplexer is configured to acquire the composite signal from the first short-range communication module.

16. The data receiving system according to claim 14 or 15, wherein the demultiplexer is configured to filter the composite signal to filter out an interference signal in the composite signal to thereby obtain an intermediate signal, and demultiplex the intermediate signal to obtain the second data corresponding to at least one the second antenna.
